# FASCICULE DE BREVET EUROPEEN

(11) **EP 2 870 383 B1**
(45) Date de publication et mention de la délivrance du brevet: **08.06.2016**
(21) Numéro de dépôt: 13744660.5
(22) Date de dépôt: 28.06.2013
(51) Int. Cl.: F16H 59/04, F16H 59/10, F16H 61/36

(54) **DISPOSITIF DE CAPTATION DE LA POSITION LINÉAIRE D'UN ORGANE DE TRANSMISSION SOUS FORME D'UN CÂBLE, ASSUJETTI A UN LEVIER D'UNE BOITE DE COMMANDE DE VITESSES D'UN VÉHICULE AUTOMOBILE.**
VORRICHTUNG ZUR ERFASSUNG DER LINEAREN POSITION EINES ÜBERTRAGUNGSELEMENTS IN FORM EINES KABELS AN EINEM HEBEL EINES KRAFTFAHRZEUGGETRIEBES
DEVICE FOR SENSING THE LINEAR POSITION OF A TRANSMISSION MEMBER IN THE FORM OF A CABLE ATTACHED TO A LEVER OF A MOTOR VEHICLE GEARBOX

(30) Priorité: 03.07.2012 FR 1256343
(43) Date de publication de la demande: 13.05.2015
(73) Titulaire: Dura Automotive Systems SAS, 91570 Bièvres (FR)
(72) Inventeur: FARGES, Thomas, F-91940 Gometz Le Chatel (FR)
(74) Mandataire: Cabinet Laurent & Charras
(86) Numéro de dépôt international: PCT/FR2013/051523
(87) Numéro de publication internationale: WO 2014/006306

(56) Documents cités:
- EP-B1- 1 096 177
- EP-B1- 1 989 505
- EP-B1- 2 078 886
- FR-A1- 2 956 177
- FR-B1- 2 930 309

## Description

L'invention se rattache au secteur technique des boites de vitesses des véhicules automobiles et concerne plus particulièrement un dispositif de détection de la position d'un levier de commande.

On rappelle de manière parfaitement connue pour un homme du métier, que le levier est monté avec capacité de déplacement angulaire dans un boitier support fixé généralement au niveau de l'habitacle du véhicule. Le levier est agencé en étant, par exemple, accouplé à un système de câbles pour assurer la commande de sélection et de passage des vitesses, soit dans le cas d'une boîte de vitesses automatique, soit dans le cas d'une boite de vitesses mécanique. Le fait de connaître la position angulaire du levier et sa position précise dans l'espace est importante lorsque l'on veut connaître la position du levier au point neutre notamment pour les véhicules équipés d'un système connu sous le nom de STOP and START généralement associé à une boite de vitesses manuelle.

Différentes solutions ont été proposées pour réaliser cette fonction. On peut citer par exemple l'enseignement du brevet FR 2930309 dont le demandeur est également titulaire qui concerne un dispositif de détection de la position du levier de commande qui est monté avec capacité de déplacement à l'encontre de moyens aptes à détecter les déplacements angulaires du levier et à envoyer les signaux électriques dans une unité de traitement. Ces moyens sont constitués par un seul capteur à effet hall monté en regard d'un aimant et apte à indiquer les différents déplacements et positionnements du levier selon les trois axes perpendiculaires X, Y, Z.

Une solution du même type ressort de l'enseignement du brevet FR 2956177 appartenant également au demandeur de la présente, selon lequel les moyens de détection de déplacement angulaire du levier sont constitués par un aimant cylindrique d'aimantation axial et orienté suivant l'axe de rotation du levier correspondant à la sélection des vitesses et par un capteur disposé en regard dudit aimant afin que le signal soit indépendant de la position de levier suivant l'axe de sélection des vitesses.

Il ressort donc de cet état de la technique donné à titre indicatif mais nullement limitatif que la détection de la position de levier s'effectue en mesurant les déplacements angulaires dudit levier.

Selon l'état de la technique, on connaît une autre possibilité de mesurer non pas les déplacements angulaires du levier mais ses déplacements linéaires. En effet, les mouvements de passage des vitesses correspondent à des translations exactes par exemple des extrémités du couple câble/gaine, par exemple à savoir, entre un embout de câble et un embout de câble et un embout de gaine. L'un des intérêts de cette mesure de déplacement linéaire est de déterminer les deux mouvements (passage et sélection) différemment d'ou la possibilité de mesurer que l'un d'entre eux par exemple le mouvement de sélection qui est seul nécessaire pour la détection du point neutre.

La possibilité de détecter un déplacement linéaire ressort par exemple du brevet EP 2078886 qui concerne un dispositif de commande de transmission en particulier d'une transmission d'un véhicule automobile avec un système d'identification de la vitesse engagée. Selon l'enseignement de ce brevet, la solution proposée est l'utilisation d'un capteur de position linéaire de conception spéciale, afin de détecter la position linéaire d'un élément de référence mobile et connecté de façon rigide pour suivre un mouvement de translation avec par exemple un embout de câble. Cette solution est relativement complexe en nécessitant comme indiqué, un capteur spécifique de la position linéaire, tout en nécessitant un encombrement relativement important, ce qui n'est pas toujours compatible avec l'environnement de la boite de vitesses.

Le brevet EP 1096177 évoque de façon générale la détection d'un déplacement linéaire par un câble et une gaine au moyen d'un capteur électrique formé par une pluralité de bobines enroulées sur un support. Toutefois, ce brevet ne donne aucun enseignement sur la façon de détecter un tel déplacement.

A partir de cet état de la technique, le problème que se propose de résoudre l'invention est d'utiliser une technologie magnétique avec pour objectif de détecter la position linéaire d'un organe de transmission tel qu'un câble assujetti au levier afin de détecter la position dudit levier, l'organe de transmission étant accouplé à au moins l'une de ses extrémités à un embout monté coulissant dans un embout de gaine qui est fixe.

Selon l'invention, le problème posé et résolu en ce que le dispositif comprend un aimant monté à l'intérieur d'un tube qui constitue l'embout de câble et un capteur a effet hall positionné sur une partie de l'embout de la gaine afin de détecter le déplacement entre l'embout de câble et l'embout de gaine correspondant à un déplacement dudit levier.

Ces caractéristiques permettent donc de détecter la position d'une commande de boite en mesurant la position d'un embout de câble par rapport à l'embout de gaine.

Selon une autre caractéristique, l'organe est un câble monté entre le levier et des éléments de la boîte de vitesses, pour la sélection desdites vitesses.

Avantageusement, l'aimant est un aimant permanent dont la direction d'aimantation varie linéairement ou sinusoïdalement suivant la direction de déplacement de l'embout.

A partir des caractéristiques à la base de l'invention soit l'aimant est monté à l'intérieur de l'embout de câble situé du côté du levier, soit l'aimant est monté à l'intérieur de l'embout de câble situé du côté de la boîte de vitesses.

A noter que l'aimant peut être soit inséré à l'intérieur du tube, soit surmoulé à l'intérieur du tube.

L'invention est exposée ci-après plus en détail à l'aide des figures des dessins annexés dans lesquels :

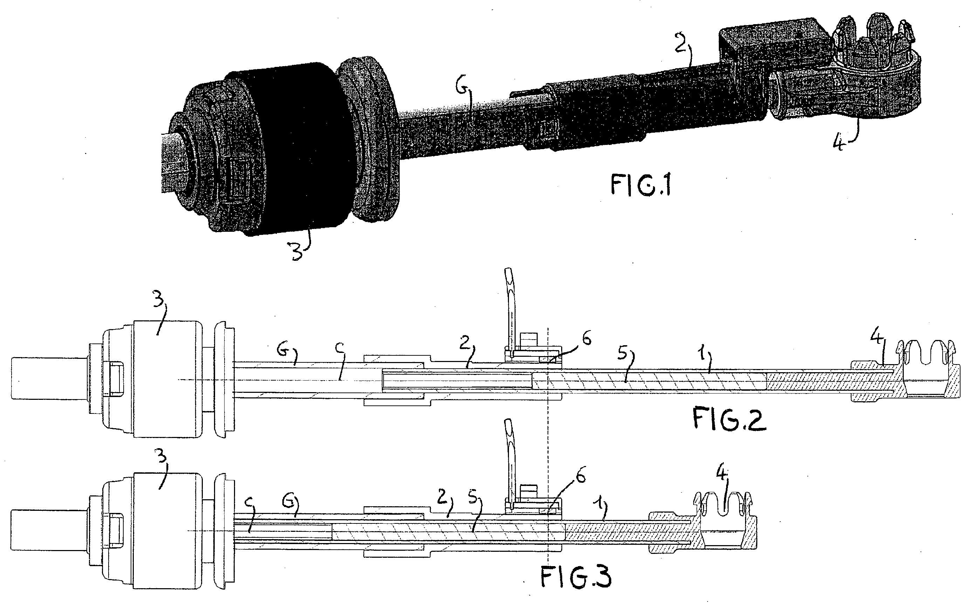

- la figure 1 est une vue en perspective d'une forme de réalisation d'une commande par câble de la sélection du passage de vitesses au moyen d'un levier et montre plus particulièrement un embout de câble et un embout de gaine
- les figures 2 et 3 sont des vues en coupe à caractère schématique montrant le principe de la mesure linéaire de l'embout de câble par rapport à l'embout de gaine.

On rappelle que le levier (non représenté) pour la commande du passage et de la sélection des vitesses, est monté avec capacité de déplacement angulaire dans un boîtier support. Le pied de levier est accouplé à des câbles de commande eux-mêmes accouplés aux organes correspondant de la boîte de vitesses. L'un de ces câbles correspond à la sélection des vitesses tandis que l'autre câble correspond au passage de vitesses. Toujours de manière connue, ces câbles (C) sont montés coulissant dans une gaine (G), et sont rendus solidaires d'un embout de câble (1) monté coulissant dans un embout de gaine (2). La gaine (G) présente un manchon d'accouplement (3) avec, par exemple, une partie du support du levier. L'extrémité de l'embout du câble (1) est par ailleurs fixée à un organe d'accouplement (4) avec une partie de la boite de vitesses. Ces différentes solutions ne sont pas décrites en détail car parfaitement connues pour un homme du métier.

Comme indiqué le but recherché est de détecter la position d'une commande de boite de vitesses, c'est-à-dire, la position de levier en mesurant la position linéaire de l'embout de câble (1) par rapport à l'embout de gaine (2). Dans ce but, selon une caractéristique à la base de l'invention, le dispositif de captation de cette position linéaire comprend un aimant (5) monté à l'intérieur de l'embout de câble (1) sous forme d'un tube. L'alésage du tube (1) est donc utilisé pour la mise en place de l'aimant (5). L'aimant (5) peut être soit, simplement inséré à l'intérieur du tube, soit surmoulé à l'intérieur du tube. A noter que cet aimant (5) peut avantageusement être du type permanent, dont la direction varie linéairement ou sinusoïdalement selon la direction de déplacement de l'embout (1). Cette caractéristique de l'aimant ressort par exemple de l'enseignement du brevet EP 1989505.

En combinaison avec l'aimant (5), un capteur (6) à effet hall est positionné sur une partie de l'embout de gaine (2) afin de détecter, comme indiqué, le déplacement entre l'embout de câble (1) et l'embout de gaine (2) correspondant à un déplacement du levier.

Avantageusement, l'aimant (5) est monté dans l'embout de câble (1) correspondant au câble pour la sélection des vitesses.

A noter que l'aimant (5) peut être monté à l'intérieur de l'embout de câble situé soit du côté du levier, soit du coté de la boite de vitesses.

Les avantages ressortent bien de la description.

## Revendications

1. Dispositif de captation de la position linéaire d'un organe de transmission (C) sous forme d'un câble, assujetti à un levier d'une boîte de commande de vitesses d'un véhicule automobile pour détecter la position dudit levier, ledit organe étant accouplé à au moins l'une de ses extrémités à un embout de câble (1) monté coulissant dans un embout de gaine (2) qui est fixe, **caractérisé en ce qu'**il comprend un aimant (5) monté à l'intérieur d'un tube (1) qui constitue l'embout de câble et un capteur a effet hall (6) positionné sur une partie de l'embout de gaine afin de détecter le déplacement entre l'embout de câble et l'embout de gaine correspondant à un déplacement dudit levier.

2. Dispositif selon la revendication 1, **caractérisé en ce que** l'organe (C) est un câble monté entre le levier et des éléments de la boîte de vitesses, pour la sélection desdites vitesses.

3. Dispositif selon l'une quelconque des revendications 1-2, **caractérisé en ce que** l'aimant (5) est un aimant permanent dont la direction d'aimantation varie linéairement ou sinusoïdalement suivant la direction de déplacement de l'embout (1).

4. Dispositif selon l'une quelconque des revendications 1-3, **caractérisé en ce que** l'aimant (5) est monté à l'intérieur de l'embout de câble (1) situé du côté du levier.

5. Dispositif selon l'une quelconque des revendications 1-3, **caractérisé en ce que** l'aimant (5) est monté à l'intérieur de l'embout de câble (1) situé du côté de la boîte de vitesses.

6. Dispositif selon l'une quelconque des revendications 1-5, **caractérisé en ce que** l'aimant (5) est inséré à l'intérieur du tube (1).

7. Dispositif selon l'une quelconque des revendications 1-5, **caractérisé en ce que** l'aimant (5) est surmoulé à l'intérieur du tube (1).

## Patentansprüche

1. Vorrichtung zur Erfassung der linearen Position eines Übertragungselementes (C) in Form eines Seilzugs, welches an einem Schalthebel für ein Getriebe eines Kraftfahrzeugs zur Erkennung der Position dieses Schalthebels befestigt ist, wobei dieses Element an mindestens einem seiner Enden mit einem Seilzugendstück (1) verbunden ist, das in einem feststehenden Hüllenendstück (2) verschiebbar angeordnet ist, **dadurch gekennzeichnet, dass** die Vorrichtung einen in einer Hülse (1) montierten Magneten (5), der das Seilzugendstück darstellt, und einen Hall-Sensor (6) umfasst, der auf einem Teil des Hüllenendstücks positioniert ist, um die Bewegung zwischen Seilzugendstück und Hüllenendstück zu erfassen, welche einer Bewegung des Schalthebels entspricht.

2. Vorrichtung nach Anspruch 1, **dadurch gekennzeichnet, dass** es sich bei dem Element (C) um einen Seilzug handelt, der zwischen dem Schalthebel und den Getriebeelementen zur Auswahl der Gangstufen angeordnet ist.

3. Vorrichtung nach einem der Ansprüche 1-2, **dadurch gekennzeichnet, dass** es sich bei dem Magneten (5) um ein Permanentmagneten handelt, dessen Magnetisierungsrichtung sich je nach Bewegungsrichtung des Endstücks (1) linear oder sinusförmig ändert.

4. Vorrichtung nach einem der Ansprüche 1-3, **dadurch gekennzeichnet, dass** der Magnet (5) in das schalthebelseitige Seilzugendstück (1) montiert ist.

5. Vorrichtung nach einem der Ansprüche 1-3, **dadurch gekennzeichnet, dass** der Magnet (5) in das getriebeseitige Seilzugendstück (1) montiert ist.

6. Vorrichtung nach einem der Ansprüche 1-5, **dadurch gekennzeichnet, dass** der Magnet (5) in die Hülse (1) eingefügt wird.

7. Vorrichtung nach einem der Ansprüche 1-5, **dadurch gekennzeichnet, dass** der Magnet (5) in die Hülse (1) aufgeformt wird.

## Claims

1. A device for sensing the linear position of a transmission member (C) in the form of a cable, secured to a gearbox lever of a motor vehicle for detecting the position of said lever, said member being coupled to at least one of its ends to a cable terminator (1) slidably mounted in a sheath terminator (2) which is fixed, **characterized in that** it comprises a magnet (5) mounted inside a tube (1) which constitutes the cable terminator and a hall effect sensor (6) positioned on part of the sheath terminator to detect the movement between the cable terminator and the sheath terminator corresponding to a movement of said lever.

2. The device according to claim 1, **characterized in that** the member (C) is a cable mounted between the lever and gearbox elements, for selecting said gears.

3. The device according to any one of claims 1-2, **characterized in that** the magnet (5) is a permanent magnet whose magnetization direction varies linearly or sinusoidally according to the movement direction of the terminator (1).

4. The device according to any one of claims 1-3, **characterized in that** the magnet (5) is mounted inside the cable terminator (1) located on the side of the lever.

5. The device according to any one of claims 1-3, **characterized in that** the magnet (5) is mounted inside the cable terminator (1) located on the side of the gearbox.

6. The device according to any one of claims 1-5, **characterized in that** the magnet (5) is inserted inside the tube (1).

7. The device according to any one of claims 1-5, **characterized in that** the magnet (5) is overmoulded inside the tube (1).
